# EUROPEAN PATENT APPLICATION

(11) **EP 3 854 724 A1**
(43) Date of publication of application: **28.07.2021**
(21) Application number: 21000023.8
(22) Date of filing: 25.01.2021
(51) Int. Cl.: B65D 77/20

(54) **RE-SEALABLE CONTAINER LID**

(30) Priority: 24.01.2020 GB 202001076
(71) Applicant: FFP Packaging Solutions Limited, Northampton NN3 6PZ (GB)
(72) Inventor: REEVE, Timothy Edward, Nottingham NG6 8EF (GB)
(74) Representative: Banford, Jonathan

(57) **Abstract**

A re-sealable plastics film lid (11) for a container such as a plastics pot for food comprises a laminate (1) of a top film layer (2) and a base film layer (3) bonded by a layer of adhesive (5). A layer of release coating (6) extends most but not all the way across the laminate (1), in between the top film layer (2) and the adhesive layer (5). A cut (13) through the base film layer (3) does not extend into the top film layer (2). The cut (13) defines a flap (14) within the base film layer (3), with the cut (13) extending into a region (60) of the lid (1) where the release coating (6) is absent. The base film (3) is sealed securely to a rim (20) of the container. When a user pulls on the lid (11) to get into the container, the top film layer (2) peels away from the bottom film layer (3) as far as the cut (13). The cut (13) then separates, and the flap (14) corns away with the top film layer (2) as it peels, while the remainder of the base film layer (3) stays attached to the rim (20) of the container. The flap (14) thus leaves an opening in the base film layer (3) allowing access into the container. The top film layer (2) and flap (14) stop peeling and remain attached to the container where the release coating layer (6) is absent. Thus, the lid (11) can be re-sealed by bringing a peripheral portion of the top film layer (2) back into contact with the peripheral portion of the base film layer (3) still attached to the rim (20) of the container. Also, because the lid (11) and the container do not separate, they can be recycled together, which is impracticable with separated film lids.

## Description

The present invention relates to a re-sealable lid for closing a container, such as a food container. More particularly but not exclusively, it relates to a re-sealable film lid for a food container, which may be recycled along with the container.

Food containers for retail purposes are frequently moulded from poly(ethylene terephthalate), or PET. The grade of PET used is substantially the same is used for moulding PET beverage bottles, so these containers are also potentially recyclable.

Such containers are normally sealed with a lid of PET film, specifically biaxially-oriented PET film, which is heat-sealed or sealed with a pressure-sensitive adhesive to extend across an opening of the container, from rim to rim. This film is peeled off to access the food within the container. Unfortunately, biaxially-oriented PET film is not easy to recycle, and so the lid normally has to be disposed of to landfill or by incineration.

Other such containers are moulded from polypropylene (PP), and can be similarly be sealed with lids of OPP (oriented polypropylene) film. Again, although the semi-rigid PP container can usually be recycled, the OPP film cannot be recycled in most circumstances, and must also be disposed of to landfill or by incineration.

A further issue with such containers is that the lid is often made re-sealable, so that part of the food may be removed and the rest stored a while longer in a re-sealed container. This is often achieved with a pressure-sensitive adhesive layer on the rim of the container, against which the film lid can be pressed to seal the container. However, this arrangement often produces a poor-quality seal, once it has been opened the first time.

Other lidding arrangements are known, using weld seal films, but these produce much stronger bonding, and usually need to be cut open. Lidding with peel seal films is also known, but this is not re-sealable, and the film lidding rarely remains attached to the tray or other container.

It is hence an object of the present invention to provide a re-sealable film lid for sealing a container that obviates the shortcomings of existing arrangements set out above and provides both improved lid performance and improved recyclability of the film materials.

According to a first aspect of the present inventions, there is provided a re-sealable film lid for an opening of a container, wherein said film lid comprises a laminate of two coextensive plastics film layers forming in use a top film layer and a base film layer mountable to the container, said top and base film layers being bonded together by a layer of adhesive material, with a layer of release coating material extending between the layer of adhesive material and the top film layer, and wherein the base film layer comprises an elongate frangible zone extending along a path defining a flap portion within the base film layer, said flap portion being disposable in use within a perimeter of the opening of the container.

In a preferred embodiment, the layer of release coating material between the layer of adhesive material and the top film layer extends across only a portion of the film lid.

Advantageously, the layer of release coating material extends across a majority of the film lid, optionally across at least three-quarters of the film lid by area.

Preferably, a majority of the flap portion of the base film layer is coextensive with the layer of release coating material.

Advantageously, the elongate frangible zone defining the flap portion extends beyond the layer of release coating material.

Optionally, the elongate frangible zone comprises first and second remote ends, each of said first and second remote ends being located beyond the layer of release coating material.

Preferably, the elongate frangible zone comprises an elongate cut penetrating through most or all of a thickness of the base film layer.

Advantageously, the elongate cut does not penetrate into the top film layer.

The elongate cut may optionally penetrate the layer of adhesive material.

Preferably, the layer of adhesive material comprises a pressure-sensitive adhesive material.

The top film layer may thus be peeled away from the base film layer and re-attached as desired.

Preferably, the layer of release coating material comprises a patterned layer of a release lacquer.

Advantageously, the patterned layer of release lacquer is applied to the top film layer by printing.

Preferably, the base film layer is provided with a layer of heat-seal coating by which it may be sealed to a rim of the opening of the container.

Alternatively, the base film layer comprises a co-extruded heat-seal surface PET film, and may be sealed to a rim of the opening of the container by said heat-seal surface.

The film lid may comprise a further layer of printed material.

The printed material may comprise label means for the container.

Preferably, the layer of printed material would be applied to a face of the top film layer within the laminate.

Advantageously, the layer of printed material is disposed between the layer of adhesive material and the top film layer, optionally between the layer of release coating material, and the top film layer.

The layer of printed material is preferably aligned for visibility through the top film layer.

The top and base film layer may each be clear, optionally optically clear.

The film lid as a whole may be clear, optionally optically clear.

In a preferred embodiment, the re-sealable film lid comprises a top film layer of poly (ethylene terephthalate) (PET) film and a base film layer of PET film.

The re-sealable film lid is then adapted for use on a container comprising PET.

In another preferred embodiment, the re-sealable film lid comprises a top film layer of polypropylene (PP) and a base film layer of PP.

The re-sealable film lid is then adapted for use on a container comprising PP.

According to a second aspect of the present inventions, there is provided a laminate film for use in the manufacture of re-sealable film lids, comprising two coextensive film layers, forming in use a top film layer of the film lid and a base film layer of the film lid mountable to a container, wherein said top and base film layers are bonded together by a layer of adhesive material, with a layer of release coating material extending between the layer of adhesive material and the top film layer, and wherein the base film layer comprises an elongate frangible zone extending along a path defining a flap portion within the base film layer, the flap portion being locatable in use within a perimeter of the film lid.

According to a third aspect of the present inventions, there is provided a method of production for a re-sealable film lid, comprising the steps of:
providing a first film of plastics material;
applying a layer of release coating material to a first surface of the first film;
providing a second film of plastics material, coextensive with the first;
applying a layer of adhesive material to a first surface of the second film;
disposing said first and second films such that their respective first faces are in contact and the layer of adhesive material bonds the first and second films together; and
forming an elongate frangible zone in the second film layer, extending along a path defining a flap portion within the second film.

Preferably, the method further comprises the step of applying a heat-seal coating to a second face of the second film, said heat-seal coating being adapted to seal the film lid to a substrate.

Alternatively, the second film plastics material can comprise a co-extruded heat-seal surface PET film, such that the heat-seal surface is adapted to seal the film lid to a substrate.

Preferably, the method comprises the step of cutting through the first and second films to form a perimeter of the film lid.

The method may comprise the step of printing material on to the first surface of the first film so as to be visible from a second surface of the first film, ideally prior to application of the layer of release coating material thereto.

According to a fourth aspect of the present inventions, there is provided a method of use of a re-sealable film lid, comprising the steps of providing a re-sealable film lid as described in the first aspect above and heat sealing said film lid to a rim of an opening of a container so as to seal said opening.

An embodiment of the present invention will now be more particularly described, by way of example and with reference to the accompanying drawings, in which:
**Figure 1** is a schematic perspective view of a multi-layered plastics film for use in the present invention;
**Figure 2** is a plan view from above of the plastics film of Figure 1 formed into a container lid embodying the present invention;
**Figure 3A** is a schematic longitudinal cross-section of the container lid of Figure 2; and
**Figure 3B** is a schematic longitudinal cross-section of the container lid of Figure 2, partially opened.

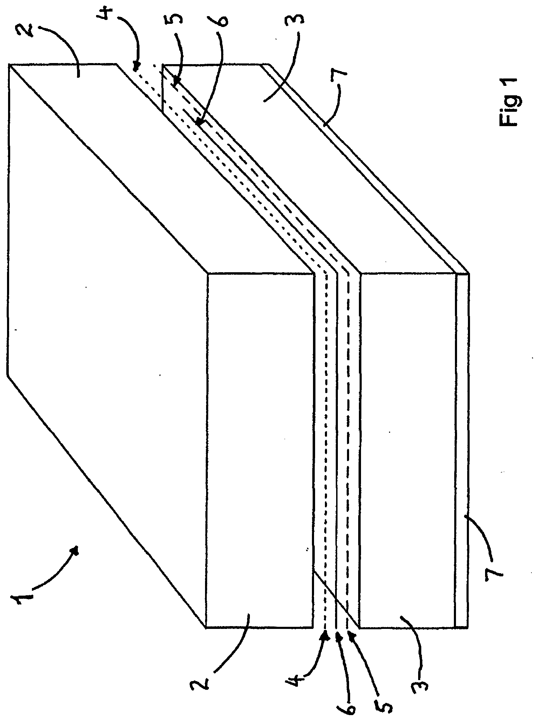

Referring now to the Figures, and to Figure 1 in particular, a multilayer film laminate 1 is shown in schematic form, with layer thicknesses exaggerated for clarity. The multilayer film laminate 1 comprises a top layer 2 of plastics film and a coextensive base layer 3 of plastics film, in this example both comprising biaxially-oriented PET (poly(ethylene terephthalate)) film. In other embodiments, both the top 2 and base layers 3 comprise oriented polypropylene (OPP) film. The multilayer film laminates 1 based on PET are for lidding PET containers, and the multilayer film laminates 1 based on OPP are for lidding PP containers. The top layer 2 will form an outer surface of a film lid, while the base 3 will form an inner surface of the film lid, being mountable to a lip or rim of an opening of a container.

The multilayer film laminate 1 comprises several further functional layers 4, 5, 6, 7. Dashed line 4 of Figure 1 represents a printed ink layer or layers 4, for example comprising labelling for a product to be stored within a respective container, visible through a clear top layer 2. The extent of this printed ink layer 4 is optional; indeed, it may be omitted if other product labelling is used, such as a self-adhesive label or a card wrapper.

Dashed line 5 of Figure 1 represents a layer of pressure-sensitive adhesive 5, extending across an entire surface of the base layer 3 facing the top layer 2. The pressure-sensitive adhesive layer 5 holds the top 2 and base 3 layers of plastics film together.

Solid line 6 of Figure 1 represents a layer of patterned release lacquer extending across a major proportion, but not all, of a surface of the top layer 2 (or of the printed ink layer 4 as appropriate) facing the base layer 3. The pressure sensitive adhesive layer 5 is thus in contact with the layer of patterned release lacquer 6, where the lacquer 6 is present, but otherwise is directly in contact with the top layer 2 (or the printed ink layer 4 where present).

The adhesion and peel strength provided by the pressure sensitive adhesive layer 5 are much greater where it contacts the top layer 2 (or the printed ink layer 4), than they are where it contacts the patterned release lacquer layer 6. However, the adhesion between the pressure sensitive adhesive layer 5 and the patterned release lacquer layer 6 is still sufficient to hold the top 2 and base layers 3 together under normal conditions.

Lastly, the base layer 3 is provided, all across its surface facing away from the top layer 2 and contactable with a rim of a container, with a layer of a heat seal coating 7. When brought into contact with an opposing surface of the container rim and heated, this heat seal coating layer 7 seals the base layer 3 of the multilayer film laminate 1 permanently to the container.

Note: the printed ink layer 4, the pressure sensitive adhesive layer 5, the patterned release lacquer layer 6 and the heat sealed coating layer 7 are all, individually, materials known to the skilled person in the area of plastics film packaging, and the exact grades used are not currently believed to have a major effect on the properties of the multilayer film laminate 1 or of lids, made from the multilayer film laminate 1, embodying the present invention.

As a guide, the top layer 2 of the film laminate 1 could comprise PET film having a thickness of 10 to 100 microns (micrometres) or an OPP film having a thickness of 10 to 100 microns. The printed ink layer 4, when required, comprises any conventional ink formulation compatible with the polymer of the top layer 2, applied by the flexographic, lithographic, gravure or digital printing processes, The patterned release lacquer layer 6 would be applied at between 0.4 and 2.0gsm (grams per square metre), ideally at or near 0.8gsm. Existing solvent-based or water-based release lacquers are believed to be suitable, applied by the flexographic, lithographic, gravure or digital printing processes. The pressure sensitive adhesive layer 5 can be a solvent-based or water-based acrylic emulsion adhesive, applied at between 3gsm and 25gsm, ideally at or near 5.0gsm. Again, this can be applied by the flexographic, lithographic, gravure or digital printing processes. The base layer 3 of the film laminate 1, like the top layer 2, can comprise PET film having a thickness of 10 to 100microns (or OPP film having a thickness of 10 to 100microns, as appropriate), with its heat seal coating 7 comprising any of the known heat sealing compositions.

Also, co-extruded heat-seal surface PET films are known, in which the heat-seal surface can be sealed to a substrate, performing the functions of the subsequently-applied heat-seal coating 7 described above. Thus, the co-extruded heat-seal surface PET film could be used in place of the base layer 3 and its heat-seal coating 7 in the film laminate 1 of the present invention.

While the film laminate 1 is here described as using clear films, they may equally well comprise opaque white or coloured films, otherwise having the same overall properties. Only printing and labelling arrangements would change.

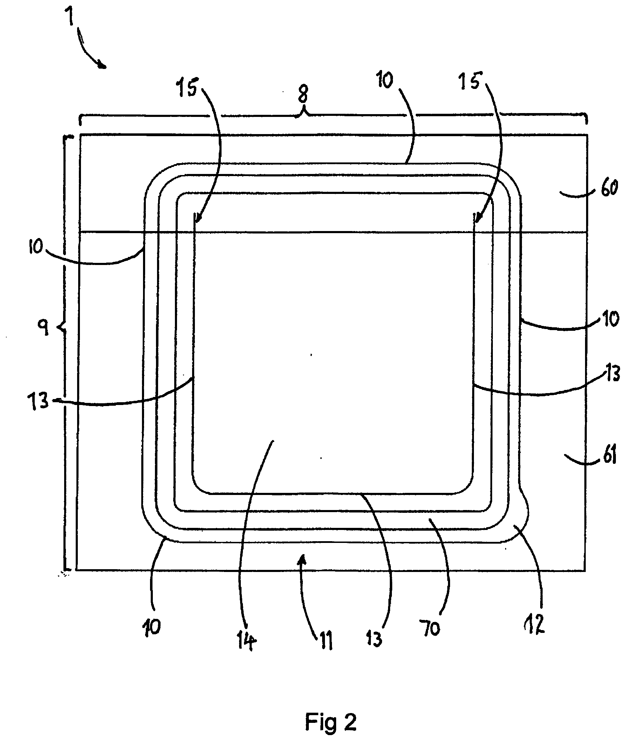

Figure 2 shows a lid 11 for a container, formed from the multilayer film laminate 1 described above. The film laminate 1 has been produced as a continuous strip, having a strip width 8 and a repeat length 9. For simplicity, Figure 2 shows a separated sheet of film laminate 1, one repeat length 9 long, but in practice multiple lids 11 may be formed from the continuous strip and only separated subsequently.

A perimeter cut 10, penetrating all through the layers 2,4,5,6,3,7 of the film laminate 1, defines the outline of the lid 11, including a peel tab 12. The shape and size of the lid 11 is governed by the shape and size of the opening of the container to which the lid 11 is to be attached. As is conventional in this field, the lid 11 is configured to extend slightly outwardly to all sides from a lip or rim of the opening. When the lid 11 is subsequently heat-sealed to the container, by means of the heat seal coating 7, sealing occurs all along a peripheral heat-sealing zone 70, located adjacent the perimeter cut 10 (except near the peel tab 12), which is where the heat-seal coating layer 7 contacts an upper surface of the lip or rim of the opening.

As noted above, the patterned release lacquer layer 6 does not extend along the whole film laminate 1. Instead, as shown more clearly in Figure 2, the film laminate 1 comprises a release zone 61 where the patterned release lacquer layer 6 is present, and a non-release zone 60 where it is absent. Conveniently, the release zones 61 and non-release zones 60 alternate along the repeat length 9 of the film laminate 1, with the non-release zones 60 each occupying a fifth to a quarter of the repeat length 9 and the release zone 61 each occupying between three quarters and four fifths of the repeat length 9.

In other embodiments (not shown), the release zone 61 and non-release zone 60 may be arranged such that they meet along a boundary line substantially parallel to the repeat length 9. This may be appropriate where the lid 11 is rectangular, for example, or for other non-square shapes, and a particular peel direction is required with respect to a landscape or portrait orientation of the lid 11 relative to the film 1. Other alignments or even shapes can be produced for this boundary line, if desired.

Also, the proportions of the non-release zone 60 and the release zone 61 can be varied, outside the "general purpose" ranges disclosed above. As long as both zones 60, 61 are sufficient to perform their intended functions (described below), there appears to be considerable freedom to vary their proportions to fit a particular lid / container design.

Characteristically of the present invention, the lid 11 is provided with a second, base layer cut 13, which extends through the base layer 3 of the film laminate 1, as well as the heat-seal coating 7 and at least partially through the layer of pressure-sensitive adhesive 5. The base layer cut 13 should not extend into the top layer 2 or even the patterned release lacquer layer 6. The base layer cut 13 can be made to the requisite degree of precision using a rotary die cutting process or by a laser profiling / cutting process.

In this particular favoured embodiment, the base layer cut 13 extends continuously adjacent to and within the peripheral heat sealing zone 70, where it extends within the release zone 61, but has an end portion 15 at each remote end of the base layer cut 13, which just extends beyond the release zone 61 into the non-release zone 60. (NB: variant embodiments are envisaged in which the base layer cut 13 forms a continuous loop, rather than a partial, generally U-shaped track as shown in Figure 2, but the illustrated configuration is currently found to be preferable).

The base layer cut 13 defines a aperture flap portion 14 within the base layer 3, the functions of which will be set out below.

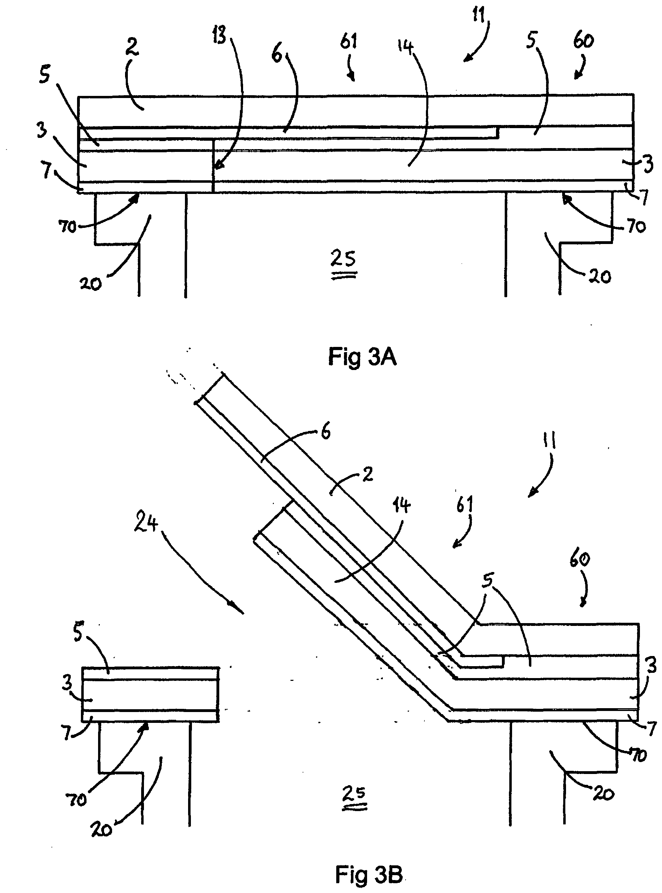

Figures 3A and 3B show the lid 11 in use, sealed and partially opened respectively. Each Figure shows a cross-section of the lid 11 along its midline, parallel to the repeat direction of the film laminate 1. The thicknesses of the layers of the film laminate 1 are exaggerated for improved visibility. The lid 11 has been heat-sealed by conventional methods to a rim 20 of a container, an interior 25 of which contains a food product. The printed ink layer 4 has been omitted for simplicity. (NB: the rim 20 is exaggerated in thickness, but to a much lesser extent than the layers of the film laminate 1; the rim 20 will normally be rigid or at least semi-rigid, whereas the lid 11 is far more flexible).

In Figure 3A, the lid 11 is heat-sealed to the container rim 20 all along the peripheral heat-sealing zone 70. The layer of pressure sensitive adhesive 5 adheres sufficiently strongly to the patterned release lacquer layer 6 across the release zone 61, as well as to the top layer 2 across the non-release zone 60, that the film laminate 1 remains whole, and seals the opening of the container, protecting its contents.

To open the container, the peel tab 12 is pulled up and back. The peel strength of the layer of pressure sensitive adhesive 5 against the layer of patterned release lacquer 6 in the release zone 61 is much lower than the peel strength of the heat-seal coating 7 is the heat-sealing zone 70, and so the film laminate 1 splits apart, top layer 2 from base layer 3, along the layer of pressure-sensitive adhesive 5.

However, when the split reaches the base layer cut 13, the path of least resistance follows the base layer cut 13, through the base layer 3. Thus, as the top layer 2 is raised, the spilt follows the base layer cut 13 and the aperture flap portion 14 of the base layer 3 thus peels back together with the top layer 2 as a whole. An aperture 24 is thus formed within the base layer 3, through which the interior 25 of the container and the product within can access.

As the peeling step proceeds further, the split will reach the end portions 15 of the base layer cut 13, and will also enter the non-release zone 60, in which the pressure-sensitive adhesive layer 5 directly contacts the top layer 2 and so there is much greater peel strength than in the release zone 61. The force needed for the split to propagate further thus becomes much greater, and in practice, the peeling-back of the lid 11 stops.

Thus, the user can easily and controllably peel back the lid 11 most of the way, without needing to take care in order to retain a final portion of the lid 11 attached to the rim 20 of the container. Thus has several benefits.

Firstly, as noted, controllable peeling of the lid 11 to allow access to the interior 25 of the container is straightforward. However, this peeling is self-limiting, so that the lid 11 remains attached to the container. This produces less mess, as fully-removed PET or OPP film lids, probably contaminated with container contents, are very light and tend to flutter away, and/or stick to something undesirable, including by static cling.

Also, with the lid 11 retained to the container by the heat-sealing zone 70 and the non-release zone 60, it is much easier to re-seal the container by bringing the lid 11 back towards the configurations in Figure 3A. Since the split outside the base layer cut 13 will have taken place either between the pressure-sensitive adhesive layer 5 and the patterned release lacquer layer 6, or through the pressure-sensitive adhesive layer 5, much or all of the pressure-sensitive adhesive 5 will remain on the portions of the base layer 3 still sealed to the container rim 20 (see left hand side of Figure 3B, for example). It is thus present to create a good seal, once the top layer 2 is pressed down on to this layer of pressure-sensitive adhesive 5 again. The locations of the rigid or semi-rigid container rim 20 beneath this pressure-sensitive adhesive 5 will also make re-adhesion easier and probably more effective.

The container can thus be opened and re-sealed several times, potentially, so the product in the container does not need to be used up completely (or wasted) after the first opening. This can currently only easily be achieved with separate semi-rigid moulded lids, using more plastic material and still unlikely to achieve as good as a re-seal.

A further major benefit is that once use of the container is complete, the film lid 11 remains attached to it. As previously noted, PET and OPP films cannot currently readily be recycled. However, when moulded PET or PP containers are recycled with a corresponding film lid still attached, the film material is only a small proportion of the material being recycled, and it is evenly distributed. It has been found that containers fitted with lids embodying the present invention can be recycled, using methods currently used for the containers alone, and there is no significant increase in processing difficulty, or reduction in the quality of the recycled plastics materials produced.

The film lids of the present invention thus produce significant commercial, technical and environmental benefits, relative to existing arrangements.

## Claims

1. A re-sealable film lid (11) for an opening of a container,
said film lid (11) comprising a laminate (1) of two coextensive plastics film layers (2,3) forming in use a top film layer (2) and a base film layer (3) mountable to the container, said top (2) and base (3) film layers being bonded together by a layer of adhesive material (5), with a layer of release coating material (6) extending between the layer of adhesive material (5) and the top film layer (2),
***characterised in that***
the base film layer (3) comprises an elongate frangible zone (13) extending along a path defining a flap portion (14) within the base film layer (3),
said flap portion (14) being disposable in use within a perimeter of the opening of the container.

2. A re-sealable film lid as claimed in Claim 1, ***characterised in that*** the layer of release coating material (6) extending between the layer of adhesive material (5) and the top film layer (2) extends across only a portion of the film lid (11), optionally across a majority of the film lid (11).

3. A re-sealable film lid as claimed in either Claim 1 or Claim 2, ***characterised in that*** a majority of the flap portion (14) of the base film layer (3) is coextensive with the layer of release coating material (6).

4. A re-sealable film lid as claimed in any one of the preceding claims, ***characterised in that*** the elongate frangible zone (13) defining the flap portion (14) extends beyond the layer of release coating material (6).

5. A re-sealable film lid as claimed in any one of the preceding claims, ***characterised in that*** the elongate frangible zone (13) comprises first and second remote ends (15), each of said first and second remote ends (15) being located beyond the layer of release coating material (6).

6. A re-sealable film lid as claimed in any one of the preceding claims, ***characterised in that*** the elongate frangible zone (13) comprises an elongate cut (13) penetrating through most or all of a thickness of the base film layer (3).

7. A re-sealable film lid as claimed in Claim 6, ***characterised in that*** said elongate cut (13) penetrates the layer of adhesive material (5) but does not penetrate into the top film layer (2).

8. A re-sealable film lid as claimed in any one of the preceding claims, ***characterised in that*** the layer of adhesive material (5) comprises a pressure-sensitive adhesive material, such that the top film layer (2) is selectably peelable away from the base film layer (3) and re-attachable thereto.

9. A re-sealable film lid as claimed in any one of the preceding claims, ***characterised in that*** the base film layer (3) is provided with a layer of heat-seal coating (7) by which it may be sealed to a rim (20) of the opening of the container.

10. A re-sealable film lid as claimed in any one of Claims 1 to 8, ***characterised in that*** the base film layer (3) comprises a co-extruded heat-seal surface PET film, and is adapted to be sealed to a rim (20) of the opening of the container by said heat-seal surface.

11. A re-sealable film lid as claimed in any one of the preceding claims, ***characterised in that*** it comprises a further layer (4) of printed material, such as labelling means for the container, optionally applied to a face of the top film layer (2) within the laminate (1).

12. A laminate film (1) for use in the manufacture of re-sealable film lids (11), comprising two coextensive film layers (2,3), forming in use a top film layer (2) of the film lid (11) and a base film layer (3) of the film lid (11) mountable to a container, wherein said top and base film layers (2,3) are bonded together by a layer of adhesive material (5), ***characterised in that*** a layer of release coating material (6) extends between the layer of adhesive material (5) and the top film layer (2), and ***in that*** the base film layer (3) comprises an elongate frangible zone (13) extending along a path (13) defining a flap portion (14) within the base film layer (3), the flap portion (14) being locatable in use within a perimeter of the film lid (11).

13. A method of production for a re-sealable film lid (11), comprising the steps of:
a. providing a first film (2) of plastics material;
b. applying a layer of release coating material (6) to a first surface of the first film (2);
c. providing a second film (3) of plastics material, coextensive with the first (2);
d. applying a layer of adhesive material (5) to a first surface of the second film (3);
e. disposing said first (2) and second films (3) such that their respective first faces are in contact and the layer of adhesive material (5) bonds the first and second films (2,3) together; and
f. forming an elongate frangible zone (13) in the second film layer (3), extending along a path (13) defining a flap portion (14) within the second film (3).

14. A method as claimed in Claim 13, ***characterised in that*** it further comprisies the step of applying a heat-seal coating (7) to a second face of the second film (3), said heat-seal coating (7) being adapted to seal the film lid (11) to a substrate.

15. A method of use of a re-sealable film lid, ***characterised in that*** it comprises the steps of providing a re-sealable film lid (11) as claimed in any one of Claims 1 to 11, and heat sealing said film lid (11) to a rim (20) of an opening of a container so as to seal said opening.
